(19) Europäisches Patentamt
European Patent Office
Office européen des brevets

(11) Veröffentlichungsnummer: **0 415 208 B1**

# (12) EUROPÄISCHE PATENTSCHRIFT

(45) Veröffentlichungstag der Patentschrift: **11.01.95**

(51) Int. Cl.[6]: **C08J 9/00**, C08L 83/12, C08L 75/04, //(C08J9/00, C08L83:12,75:04)

(21) Anmeldenummer: **90115841.0**

(22) Anmeldetag: **18.08.90**

## (54) Verwendung von Polysiloxan-Polyoxyalkylen-Blockmischpolymerisaten bei der Herstellung von Polyurethanhartschäumen.

(30) Priorität: **31.08.89 DE 3928867**

(43) Veröffentlichungstag der Anmeldung: **06.03.91 Patentblatt 91/10**

(45) Bekanntmachung des Hinweises auf die Patenterteilung: **11.01.95 Patentblatt 95/02**

(84) Benannte Vertragsstaaten: **BE DE FR GB IT NL**

(56) Entgegenhaltungen:
**GB-A- 1 073 312**
**GB-A- 1 188 720**
**GB-A- 1 203 908**
**US-A- 4 038 221**

(73) Patentinhaber: **Th. Goldschmidt AG**
**Goldschmidtstrasse 100**
**D-45127 Essen (DE)**

(72) Erfinder: **Kollmeier, Hans-Joachim, Dr.**
**Barkhorstrücken 27**
**D-4300 Essen (DE)**
Erfinder: **Langenhagen, Rolf-Dieter**
**Kampstrasse 5**
**D-4321 Hattingen-Niederwenigern (DE)**
Erfinder: **Schator, Helmut**
**Breilsort 14**
**D-4300 Essen (DE)**
Erfinder: **Weitemeyer, Christian, Dr.**
**Sundernholz 67**
**D-4300 Essen (DE)**

**EP 0 415 208 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von aminofunktionellen Polysiloxan-Polyoxyalkylen-Blockmischpolymerisaten bei der Herstellung von Polyurethanhartschäumen.

Polyurethanhartschäume werden entsprechend dem Stand der Technik aus Polyolen mit mindestens drei Hydroxylgruppen je Molekül, mindestens difunktionellen Polyisocyanaten, Katalysatoren, Treibmitteln und Polysiloxan-Polyoxyalkylen-Blockmischpolymerisaten als Schaumstabilisatoren sowie gegebenenfalls üblichen Zusatzmitteln hergestellt.

Eine zusammenfassende Darstellung der verwendbaren Rohstoffe und der anwendbaren Verfahren ist in Ullmann "Enzyklopädie der technischen Chemie", 1980, Band 19, Seiten 301 bis 341, und Kunststoff-Handbuch, Band VII, Polyurethane von R. Vieweg und A. Höchtlen, Carl Hanser Verlag, München, 1966, Seiten 504 bis 544, zu finden.

Im allgemeinen verwendet man Polyetherole oder Polyesterole mit mindestens drei Hydroxylgruppen je Molekül, wobei die OH-Zahl der Polyole im allgemeinen zwischen 300 bis 800 liegt.

Als Treibmittel wird vorzugsweise Trichlorfluormethan oder eine Mischung von Trichlorfluormethan-Difluordichlormethan, im allgemeinen in Kombination mit Wasser, verwendet. Das Wasser reagiert mit dem Isocyanat unter Abspaltung von Kohlendioxid und Polyharnstoff. Die entstehenden Formkörper sind fast immer geschlossenzellig. Das Raumgewicht der Hartschaumstoffe liegt zwischen etwa 23 bis 1000 (g/l oder kg/$m^3$).

Stellt man einen Hartschaum mit einem Raumgewicht unter 23 (g/l) her, erfolgt meist ein Schrumpf, d.h. das Zellgerüst kann bei geschlossenen Zellen dem äußeren Luftdruck nicht mehr standhalten. Dieser Schrumpf wird noch durch die Diffusion des Kohlendioxids durch die intakten Zellmembranen hindurch in Richtung der Oberfläche des Schaumkörpers unterstützt.

Will man einen dimensionsstabilen, sehr leichten Polyurethanhartschaum herstellen, verwendet man entsprechend dem Stand der Technik überschüssige Mengen an Wasser, für die keine entsprechende Isocyanatmenge zur Verfügung steht. Das überschüssige Wasser verdampft bei Erreichen des Siedebereiches und reißt die Zellmembranen ein, wenn man nicht übermäßig stabilisiert.

Eine andere Art von Polyurethanhartschäumen sind die sogenannten I-K-Schäume. Hier gibt man das erforderliche Polyol mit den Katalysatoren, den Stabilisatoren und dem physikalischen Treibmittel und einen erheblichen Überschuß an Isocyanat in eine Sprühdose und läßt das Gemisch in der Sprühdose reagieren. Es entsteht ein Isocyanatgruppen enthaltendes Prepolymer. Betätigt man das Sprühventil, drückt das Treibmittel das Prepolymer aus der Dose heraus, und es kommt zu einer spontanen Aufschäumung. Dabei entsteht zunächst ein sehr weicher Schaum. Durch Reaktion mit der Luftfeuchtigkeit reagieren die noch vorhandenen Isocyanatgruppen. Dabei entsteht ein weitgehend geschlossenzelliger Hartschaum. Diese Schaumtypen werden z.B. bei der Befestigung von Türzargen und Fensterrahmen eingesetzt. Man schäumt somit die Zwischenräume zwischen der Wand und dem einzubauenden Objekt aus. Aufgrund von Luftdruckschwankungen dehnt sich der geschlossenzellige Schaum aus oder zieht sich zusammen, was auf die Türzargen und die Fensterrahmen nachteiligen Einfluß ausübt, d.h. die Paßgenauigkeit der Türen und Fenster ist schwankend.

Es hat sich gezeigt, daß die Qualität und die Eigenschaften des gebildeten Hartschaumes in besonderem Maße von der Struktur und der chemischen Zusammensetzung des verwendeten Schaumstabilisators abhängen.

Es sind deshalb bereits als Schaumstabilisatoren Polysiloxan-Polyoxyalkylen-Blockmischpolymerisate unterschiedlicher Struktur und unterschiedlicher Zusammensetzung beschrieben worden.

Als Polysiloxan-Polyoxyalkylen-Blockmischpolymerisate sind für den vorgenannten Zweck, z.B. in der DE-AS 17 19 238, gegen Hydrolyse beständige Siloxan-Oxyalkylen-Copolymerisate der allgemeinen Formel

$$(CH_3)_3SiO\,[(CH_3)_2SiO]_l\,[R(OC_2H_4)_x(OC_3H_6)_yO(CH_2)_z\overset{CH_3}{\overset{|}{Si}}-O]_p-Si(CH_3)_3$$

(l = 3 bis 25; x = 1 bis 25; y = 0 bis 15; z = 2 oder 3; p = 1 bis 10; R = Wasserstoff oder Methyl) mit der Maßgabe, daß mindestens 25 Gew.-% der Oxyalkylengruppen Oxyethylengruppen sind und im Falle von R = H die Hydroxylgruppen mindestens 1,5 Gew.-% des Copolymerisats ausmachen, beschrieben worden.

Nach der DE-PS 20 29 293 verwendet man zur Herstellung von Polyurethanschaumstoffen als Schaumstabilisatoren siloxanmodifizierte Carbamidsäurederivate, die aus mindestens einer Struktureinheit der allgemeinen Formel

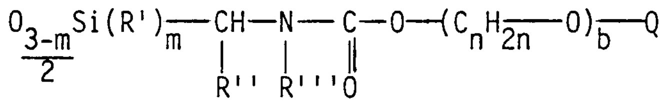

und durch Si-O-Si-Brücken damit verbundenen weiteren Struktureinheiten der allgemeinen Formel

$R'_2\,SiO_{2/2}$

bestehen, wobei mindestens eine von tausend Struktureinheiten der erstgenannten Formel entspricht, und in denen

- R′ einen gegebenenfalls halogen- oder cyansubstituierten $C_1$-$C_{10}$-Alkyl-; $C_4$-$C_{10}$-Cycloalkyl- oder $C_6$-$C_{10}$-Arylrest,
- R″ ein Wasserstoffatom oder einen Methyl- oder Phenylrest,
- R‴ einen $C_1$-$C_{10}$-Alkyl-, $C_4$-$C_{10}$-Cycloalkyl-, $C_2$-$C_{10}$-Alkenyl-, $C_7$-$C_{10}$-Aralkyl-, Di-(C-$C_{10}$-alkyl)amino-$C_1$-$C_{10}$-alkyl-, $C_6$-$C_{10}$-Aryl- oder $C_7$-$C_{10}$-Alkarylrest,
- Q einen gesättigten $C_1$-$C_6$-Alkylrest oder $C_6$-Arylrest,
- m 1 oder 2,
- n 2, 3 oder 4 und
- b eine ganze Zahl von 1 bis 200

darstellt, wobei diese Reste und Zahlenwerte an jeder Stelle einer Molekel unabhängig voneinander sind.

Weitere, besonders geeignete Polysiloxan-Polyoxyalkylen-Blockmischpolymerisate sind in der DE-PS 16 94 366 genannt. Dabei ist ein Verfahren zur Herstellung von Polyurethanschaumstoffen beansprucht, welches dadurch gekennzeichnet ist, daß man Polyoxyalkylen-Polysiloxan-Blockmischpolymerisate, deren Polysiloxanblock in an sich bekannter Weise aufgebaut ist, deren Polyoxyalkylenblock jedoch aus 25 bis 70 Gewichtsprozent eines Polyoxyalkylens mit einem durchschnittlichen Molekulargewicht von 1600 bis 4000 und einem Ethylenoxidgehalt von 20 bis 100 Gewichtsprozent, Rest Propylenoxid und gegebenenfalls höhere Alkylenoxide, und 30 bis 75 Gewichtsprozent eines Polyoxyalkylens mit einem durchschnittlichen Molekulargewicht von 400 bis 1200 und einem Ethylenoxidgehalt von 65 bis 100 Gewichtsprozent, Rest Propylenoxid und gegebenenfalls höhere Alkylenoxide, besteht, verwendet. Das Wesen dieses Patentes besteht somit darin, daß in dem Blockmischpolymerisat Polyoxyalkylenblöcke definierten unterschiedlichen Aufbaus und damit unterschiedlicher Hydrophilie enthalten sind.

Der Erfindung liegt die Aufgabe zugrunde, Schaumstabilisatoren zu finden, welche in einem Raumgewichtsbereich von 15 bis 100 (g/l) eine Stabilisierung der Zellen von Hartschäumen gewährleisten und am Ende des Steigvorganges eine zumindest teilweise Öffnung der Zellen bewirken. Diese Zellenöffnung gewährleistet die Bildung dimensionsstabilerer Schäume. Dabei genügt es, wenn ein erheblicher Teil der Zellen geöffnet wird. Eine 100 %ige Zellöffnung ist nicht erforderlich.

Diese Aufgabe wird erfindungsgemäß gelöst durch die Verwendung von Polysiloxan-Polyoxyalkylen-Blockmischpolymerisaten, welche mindestens eine an ein Siliciumatom gebundene aminofunktionelle Gruppe der allgemeinen Formel

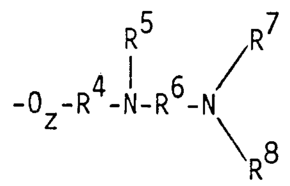

oder

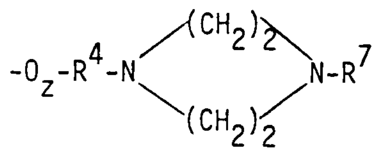

aufweisen,

$R^4$ = ein zweiwertiger Rest,

$R^5$ = Wasserstoff- oder Alkylrest mit 1 bis 4 Kohlenstoffatomen, Polyetherrest der Formel $-(C_qH_{2q}O)_rR^9$ (q = 2, 3 oder 4; r = 1 bis 100; $R^9$ = Wasserstoff- oder Alkylrest mit 1 bis 4 Kohlenstoffatomen) oder der Rest

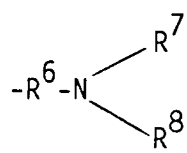

$R^6$ = zweiwertiger aliphatischer Kohlenwasserstoffrest mit 2 bis 6 Kohlenstoffatomen oder zweiwertiger aromatischer Kohlenwasserstoffrest,

$R^7$, $R^8$ = Alkylrest mit 1 bis 4 Kohlenstoffatomen, der eine OH-Gruppe aufweisen kann oder gemeinsamer Bestandteil eines 5- oder 6-gliedrigen Ringes, der ein Sauerstoff- oder Stickstoffatom enthalten kann,

z = 0 oder 1

als Mittel zur zumindest teilweisen Zellöffnung von sonst geschlossene Zellen enthaltenden Polyurethanhartschäumen in Mengen von etwa 0,2 bis 5 Gew.-%, bezogen auf Polyol oder Isocyanatgruppen aufweisendes Prepolymer.

Die aminofunktionelle Gruppe kann somit über eine SiOC- oder SiC-Bindung mit dem Polysiloxangerüst verbunden sein, je nachdem, ob der Index z einen Wert von 0 hat oder gleich 1 ist.

$R^4$ ist ein zweiwertiger Rest, insbesondere ein zweiwertiger aliphatischer Kohlenwasserstoffrest mit 2 bis 6 Kohlenstoffatomen. Vorzugsweise ist der Rest $R^4$ ein Rest der Gruppe

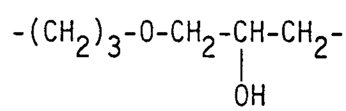

mit der Maßgabe, daß der Index z in der aminofunktionellen Gruppe gleich 0 ist.

$R^5$ ist ein Wasserstoff- oder Alkylrest mit 1 bis 4 Kohlenstoffatomen. Als Alkylrest ist der Methylrest bevorzugt.

$R^5$ kann auch die Bedeutung eines Polyetherrestes der Formel $-(C_qH_{2q}O)_rR^9$ haben. q hat dabei einen Absolutwert von 2, 3 oder 4. Der durchschnittliche Wert im polymeren Molekül kann eine gebrochene Zahl von 2 bis 4 sein. r hat einen Wert von 1 bis 100. $R^9$ ist ein Wasserstoff- oder Alkylrest mit 1 bis 4 Kohlenstoffatomen, wobei als Alkylrest wiederum der Methylrest bevorzugt ist. Vorzugsweise entspricht dabei der Polyetherrest in seiner Zusammensetzung dem Polyoxyalkylenblock bzw. den Polyoxyalkylenblöcken des Polysiloxan-Polyoxyalkylen-Blockmischpolymerisates, an dessen Siloxanblock die aminofunktionelle Gruppe gebunden ist.

$R^5$ kann schließlich auch ein Rest der Formel

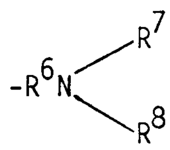

sein.

$R^6$ ist ein zweiwertiger aliphatischer Kohlenwasserstoffrest mit 2 bis 6 Kohlenstoffatomen, vorzugsweise ein zweiwertiger aliphatischer Kohlenwasserstoffrest mit 2 bis 4 Kohlenstoffatomen oder ein zweiwertiger aromatischer Kohlenwasserstoffrest, vorzugsweise der Phenylenrest.

$R^7$ und $R^8$ sind gleich oder verschieden und bedeuten Alkylreste mit 1 bis 4 Kohlenstoffatomen, vorzugsweise Methylreste. Die Alkylreste können Hydroxylgruppen aufweisen. $R^7$ und $R^8$ können außerdem gemeinsamer Bestandteil eines 5- oder 6-gliedrigen Ringes sein, der ein Sauerstoffatom oder Stickstoffatom aufweisen kann, z.B.

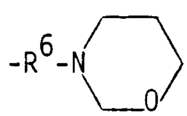 , 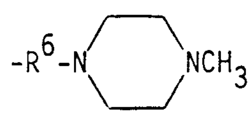

Die aminofunktionellen Gruppen der erfindungsgemäß zu verwendenden Polysiloxan-Polyoxyalkylen-Blockmischpolymerisate weisen somit mindestens ein tertiäres und ein sekundäres Stickstoffatom oder zwei tertiäre Stickstoffatome auf. Dies ist offenbar die strukturelle Voraussetzung für die Fähigkeit der zumindest teilweisen Zellöffnung von sonst geschlossene Zellen enthaltenden Polyurethanhartschäumen.

Die aminofunktionellen Gruppen können Bestandteil eines linearen oder eines verzweigten Polysiloxan-Polyoxyalkylen-Blockmischpolymerisates sein. Handelt es sich um Blockmischpolymerisate mit einer linearen Siloxankette, können die aminofunktionellen Gruppen seitenständig und/oder endständig gebunden sein.

Eine bevorzugte Ausführungsform des Gegenstandes vorliegender Erfindung ist deshalb die Verwendung von Polysiloxan-Polyoxyalkylen-Blockmischpolymerisatenmit der allgemeinen durchschnittlichen Formel

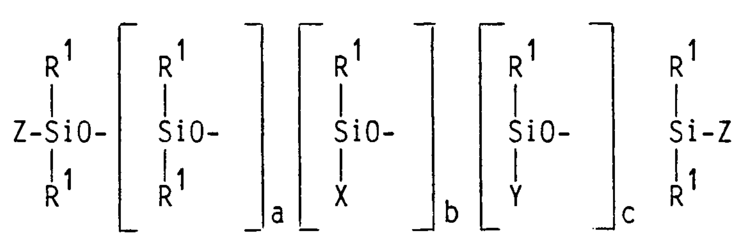 I

wobei

- $R^1$ ein Alkylrest mit 1 bis 6 Kohlenstoffatomen ist, jedoch mindestens 90 % der Reste $R^1$ Methylreste sind,
- X ein Polyoxyalkylenblock der allgemeinen Formel

  $-R^2_p\ -O-(C_mH_{2m}O-)_nR^3$

  ist,
  in dem $R^2$ ein zweiwertiger Alkylenrest mit 3 bis 11 Kohlenstoffatomen,
- $R^3$ ein Wasserstoff- oder Alkylrest mit 1 bis 4 Kohlenstoffatomen ist,
- p einen Wert von 0 oder 1 hat,
- m die Zahl 2, 3 oder 4 bedeutet und der durchschnittliche Wert 2,0 bis 2,7 beträgt,

n einen Wert von 1 bis 100 hat,

Y eine aminofunktionelle Gruppe der Formel

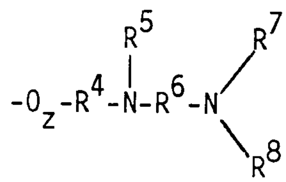

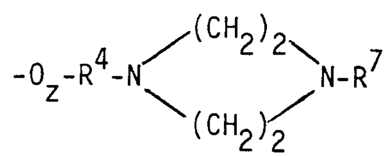

ist, in der $R^4$, $R^5$, $R^6$, $R^7$, $R^8$ und z die bereits angegebene Bedeutung haben,

Z die Bedeutung von X, Y oder $R^1$ hat,

a einen Wert von 10 bis 150,

b einen Wert von 1 bis 20,

c einen Wert von 1 bis 20 hat.

In der Formel 1 ist $R^1$ ein Alkylrest mit 1 bis 6 Kohlenstoffatomen. Mindestens 90 % der Reste $R^1$ sind Methylreste. Vorzugsweise sind jedoch alle Reste $R^1$ Methylreste.

X ist ein Polyoxyalkylenblock der allgemeinen Formel

$-R^2_p-O-(C_mH_{2m}O-)_nR^3$

In dieser Formel des Polyoxyalkylenblockes ist $R^2$ ein zweiwertiger Alkylenrest mit 3 bis 11 Kohlenstoffatomen, insbesondere der Rest $-(CH_2)_3-$ oder $-(CH_2)_{11}-$. Besonders bevorzugt ist der Rest $-(CH_2)_3-$.

$R^3$ ist ein Wasserstoff- oder Alkylrest mit 1 bis 4 Kohlenstoffatomen, insbesondere ein Methylrest. p hat einen Wert von 0 oder 1. m bedeutet einen Absolutwert von 2, 3 oder 4, wobei aber der durchschnittliche Wert im polymeren Molekül 2,0 bis 2,7 beträgt.

n hat einen Wert von 1 bis 100.

Y ist wiederum eine aminofunktionelle Gruppe der bereits beschriebenen Formeln

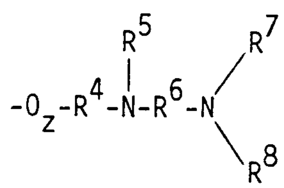

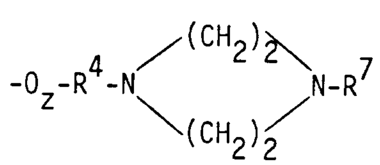

In dieser Formel haben die Reste $R^4$, $R^5$, $R^6$, $R^7$, $R^8$ und der Index z die bereits angegebene Bedeutung.

Z hat die Bedeutung des Restes X, Y oder $R^1$.

a hat einen Wert von 10 bis 150, vorzugsweise von 15 bis 90.

b hat einen Wert von 1 bis 20, vorzugsweise von 1 bis 10.

c hat einen Wert von 1 bis 20, vorzugsweise von 1 bis 10.

Das Verhältnis der Indices b : c ist vorzugsweise 0,9 : 0,1 bis 0,2 : 0,8.

Die aminofunktionellen Gruppen können auch Bestandteil eines verzweigten Polysiloxan-Polyoxyalkylen-Blockmischpolymerisates sein.

Eine weitere bevorzugte Ausführungsform des Gegenstandes vorliegender Erfindung besteht deshalb in der Verwendung von Polysiloxan-Polyoxyalkylen-Blockmischpolymerisaten mit der allgemeinen durchschnittlichen Formel

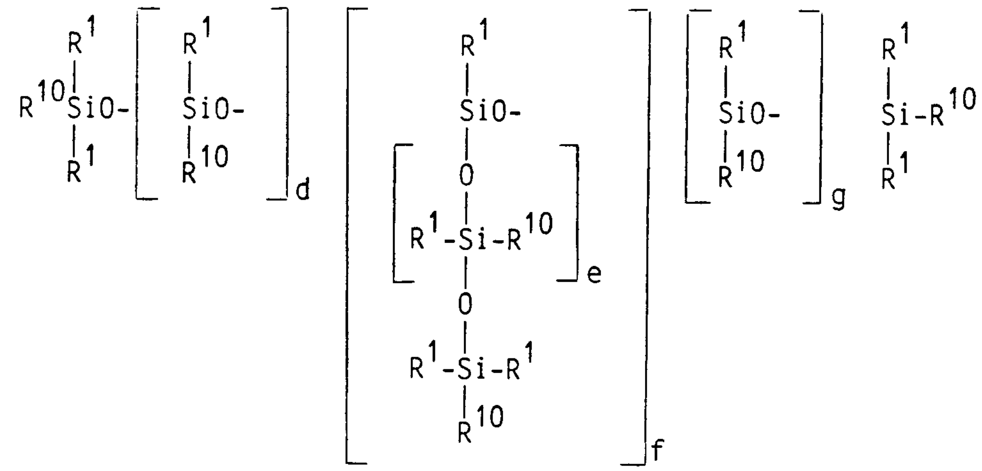

II

In dieser Formel II hat $R^1$ die bereits angegebene Bedeutung. $R^{10}$ ist ein Rest, der ausgewählt ist aus der Gruppe $R^1$, X und Y, die bereits im vorstehenden ausführlich erläutert sind. Es muß jedoch die Bedingung erfüllt sein, daß im durchschnittlichen Molekül mindestens ein Rest X und mindestens ein Rest Y vorhanden sind.

d hat einen Wert von 0 bis 20, vorzugsweise einen Wert von 1 bis 10.

e hat einen Wert von 0 bis 20, vorzugsweise einen Wert von 1 bis 10.

f hat einen Wert von 1 bis 10, vorzugsweise einen Wert von 1 bis 6.

g hat einen Wert von 0 bis 20, vorzugsweise einen Wert von 1 bis 10.

Unabhängig von der Struktur des Gerüstes des Polysiloxan-Polyoxyalkylen-Blockmischpolymerisates sind aminofunktionelle Gruppen bevorzugt, bei denen $R^5$ ein Wasserstoff- oder Methylrest, $R^6$ ein $-(CH_2)_3$-Rest und $R^7$, $R^8$ jeweils ein Methylrest ist.

Die erfindungsgemäß zu verwendenden Verbindungen werden vorzugsweise der Polyolkomponente oder dem Isocyanatgruppen aufweisenden Prepolymer in einer Menge von 0,2 bis 5 Gew.-%, vorzugsweise in einer Menge von 0,5 bis 2 Gew.-% zugesetzt.

Die erfindungsgemäß zu verwendenden Verbindungen können entsprechend dem Stand der Technik hergestellt werden. Bei einem bevorzugten Verfahren setzt man ein Organopolysiloxan, welches SiH-Gruppen aufweist, mit einer Mischung aus einem Allylpolyether und Allylglycidether in Gegenwart eines Hydrosilylierungskatalysators um. Nach Entfernen von überschüssigem Allylglycidether wird das Verfahrensprodukt mit N,N-Dialkylaminoalkylamin umgesetzt.

Bei einem anderen Verfahren vermischt man zunächst ein Polyoxyalkylenethermonool mit einem N,N-Dialkylaminoalkylmethylaminoalkanol und setzt das Gemisch mit einem Chlorpolysiloxanylsulfat entsprechend US-PS 3 115 512 um.

Beim erstgenannten Verfahren erhält man modifizierte Organopolysiloxane, an die Polyetherblöcke und Amine über SiC-Bindungen gebunden sind. Im zweiten Falle entstehen analoge Verbindungen mit SiOC-Verknüpfung. Weitere Einzelheiten dieser Verfahren kann der Fachmann den Beispielen 1 bis 10 entnehmen.

Beispiele erfindungsgemäß zu verwendender Verbindungen sind:

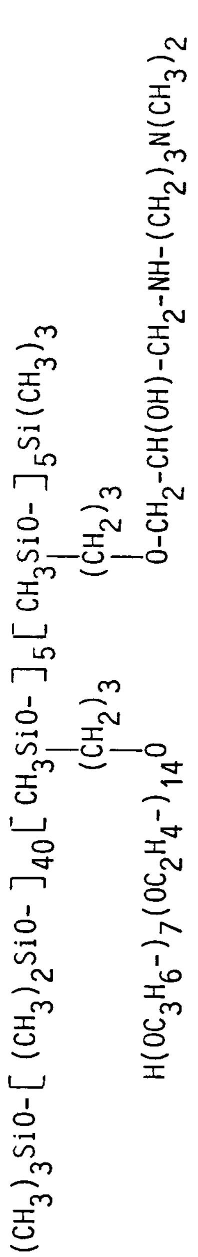

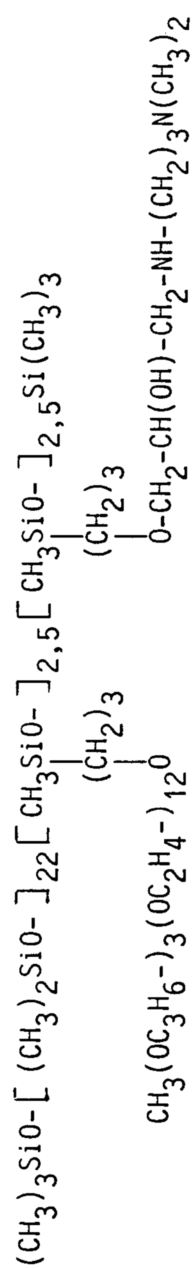

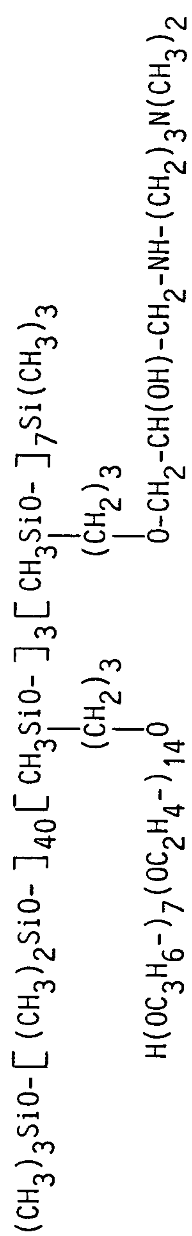

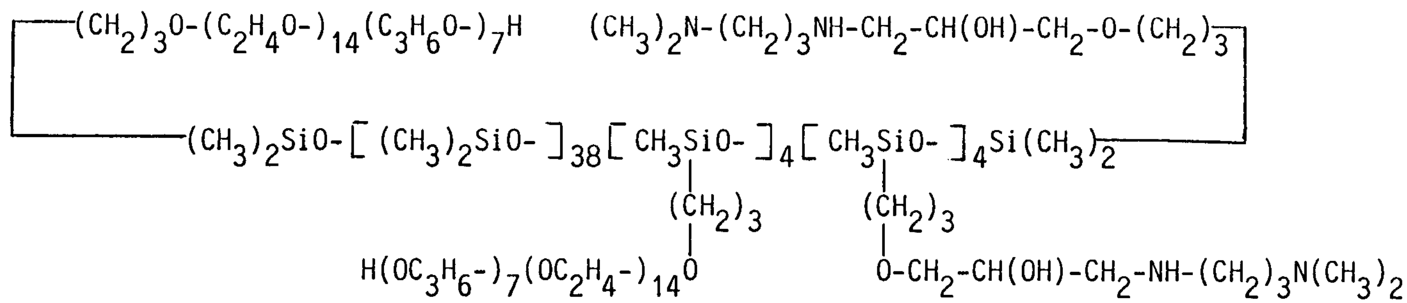

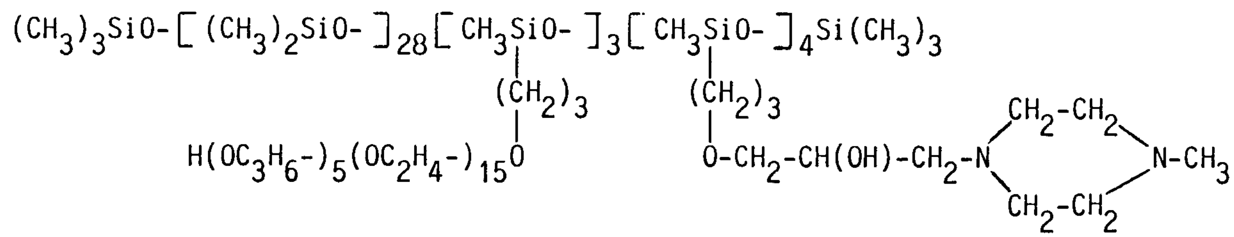

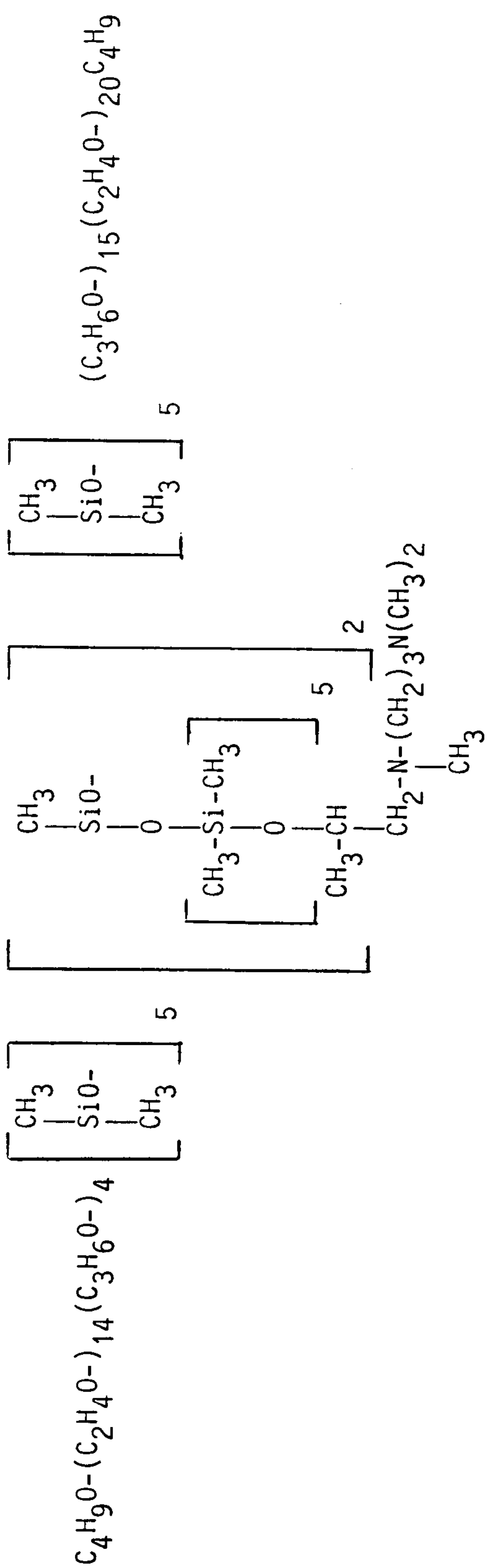

In den folgenden Beispielen wird zunächst die Herstellung der erfindungsgemäßen Verbindungen beschrieben. In weiteren Beispielen wird die durch die Verwendung dieser Verbindungen bewirkte Zellöffnung nachgewiesen.

Beispiel 1

In einem Kolben, der mit Tropftrichter, Rührer, Thermometer, Gaseinleitung und Rückflußkühler versehen ist, werden 135 g (= 0,125 Mol) eines Polyethers mit der mittleren Formel

$CH_2=CH\text{-}CH_2\text{-}(OC_2H_4)_{14}(OC_3H_6)_7OH$

14,3 g (= 0,125 Mol) Allylglycidether und 4 mg cis-$[PtCl_2(NH_3)_2]$ vorgelegt. Durch die Apparatur wird Stickstoff geleitet. Bei einer Temperatur von 110 bis 115 °C werden 74,6 g (= 0,2 Mol SiH) eines Siloxans mit der durchschnittlichen Formel

$(CH_3)_3SiO[(CH_3)_2SiO]_{40}[(CH_3)HSiO]_{10}Si(CH_3)_3$

in 25 Min. zugetropft. Anschließend läßt man 2 Std. nachreagieren. Danach wird der überschüssige Allylglycidether im Vakuum (20 mbar) abdestilliert, wobei die Temperatur des Kolbeninhalts auf 140 °C gesteigert wird. Zum Schluß wird das Produkt bei 80 °C mit 2 g Bentonit versetzt, 30 Min. gerührt und filtriert. Man erhält ein klares, gelblich gefärbtes Produkt. Der SiH-Umsatz beträgt 99,2 % (bestimmt über in alkalischem Medium mit n-Butanol abspaltbarem Wasserstoff). Der Gehalt an Epoxy-O beträgt 0,76 % (theoretisch: 0,72 %).

In einen mit Rührer, Thermometer und Rückflußkühler versehenen Kolben werden 190 g (= 0,09 Mol Epoxygruppen) des erhaltenen, Epoxygruppen enthaltenden Polyethersiloxans und 13,8 g (= 0,135 Mol) N,N-Dimethylaminopropylamingegeben, auf 80 °C erwärmt und 5 Std. gerührt. Danach wird das überschüssige Amin bei 140 °C und 20 mbar abdestilliert. Zurück bleibt ein klares, gelbbraunes Produkt mit einem Stickstoffgehalt von 1,2 % (theoretisch: 1,27 %) und einer Viskosität (25 °C) von 1106 mPas.

Beispiel 2

In einem Kolben, der mit Tropftrichter, Rührer, Thermometer, Gaseinleitung und Rückflußkühler versehen ist, werden 189 g (= 0,175 Mol) eines Polyethers mit der mittleren Formel

$CH_2=CH\text{-}CH_2\text{-}(OC_2H_4)_{14}(OC_3H_6)_7OH$

8,6 g (= 0,075 Mol) Allylglycidether und 4 mg cis-$[PtCl_2(NH_3)_2]$ vorgelegt. Durch die Apparatur wird Stickstoff geleitet. Bei einer Temperatur von 110 bis 115 °C werden 74,6 g (= 0,2 Mol SiH) eines Siloxans der durchschnittlichen Formel

$(CH_3)_3SiO[(CH_3)_2SiO]_{40}[(CH_3)HSiO]_{10}Si(CH_3)_3$

in 20 Min. zugetropft. Anschließend läßt man 2 Std. nachreagieren. Danach wird der überschüssige Allylglycidether bei 20 mbar abdestilliert. Dabei wird die Temperatur des Kolbeninhalts auf 140 °C erhöht. Dem Ansatz wird eine kleine Probe zur Analyse entnommen. Der SiH-Umsatz liegt bei 98,5 % und der Gehalt an Epoxy-O bei 0,33 % (theoretisch: 0,35 %). Bei Raumtemperatur wird der Ansatz mit 12,3 g (= 0,12 Mol) N,N-Dimethylaminopropylamin versetzt, aufgeheizt und 5 Std. bei 80 °C gerührt. Danach wird das überschüssige Amin bei 140 °C und 20 mbar abdestilliert. Man erhält ein klares, hellbraunes Produkt mit einem Stickstoffgehalt von 0,55 % (theoretisch: 0,61 %) und einer Viskosität (25 °C) von 874 mPas.

Beispiel 3

Entsprechend den Bedingungen von Beispiel 1 werden zunächst 153,2 g (= 0,125 Mol) eines Polyethers mit der mittleren Formel

$CH_2=CH\text{-}CH_2(OC_2H_4)_{17}(OC_3H_6)_7OCH_3$

und 14,3 g (= 0,125 Mol) Allylglycidether mit 74,6 g (= 0,2 Mol SiH) eines Siloxans mit der durchschnittlichen Formel

$(CH_3)_3SiO[(CH_3)_2SiO]_{40}[(CH_3)HSiO]_{10}Si(CH_3)_3$

in Gegenwart von 8 mg cis-$[PtCl_2(NH_3)_2]$ umgesetzt und aufgearbeitet. Das Zwischenprodukt ist klar und gelbbraun gefärbt. Der SiH-Umsatz beträgt 97,4 % und der Gehalt an Epoxy-O 0,7 % (theoretisch: 0,67 %).

Wie in Beispiel 1 werden 183 g (= 0,08 Mol Epoxygruppen) des Epoxygruppen enthaltenden Zwischenproduktes mit 16,4 g (= 0,16 Mol) N,N-Dimethylaminopropylamin umgesetzt. Man erhält ein klares, gelbbraunes Produkt mit einem Stickstoffgehalt von 1,03 % (theoretisch: 1,17 %) und einer Viskosität (25 °C) von 614 mPas.

Beispiel 4

Entsprechend den Bedingungen von Beispiel 1 werden zunächst 135 g (= 0,125 Mol) eines Polyethers mit der mittleren Formel

$CH_2=CH\text{-}CH_2\text{-}(OC_2H_4)_{14}(OC_3H_6)_7OH$

und 14,3 g (= 0,125 Mol) Allylglycidether mit 68,7 g (= 0,2 Mol SiH) eines Siloxans mit der durchschnittlichen Formel

$H(CH_3)_2SiO[(CH_3)_2SiO]_{38}[(CH_3)HSiO]_8Si(CH_3)_2H$

in Gegenwart von 3 mg cis-$[PtCl_2(NH_3)_2]$ umgesetzt und aufgearbeitet. Das Zwischenprodukt ist klar und gelb gefärbt. Der SiH-Umsatz beträgt 99 % und der Gehalt an Epoxy-O 0,7 % (theroretisch: 0,74 %).

Wie in Beispiel 1 werden 171 g (= 0,075 Mol Epoxygruppen) des Epoxygruppen enthaltenden Zwischenproduktes mit 15,3 g (= 0,15 Mol) N,N-Dimethylaminopropylamin umgesetzt. Man erhält ein klares, gelbbraunes Produkt mit einem Stickstoffgehalt von 1,05 % (theoretisch: 1,17 %) und einer Viskosität (25 °C) von 980 mPas.

Beispiel 5

Entsprechend den Bedingungen von Beispiel 2 werden zunächst 95 g (= 0,125 Mol) eines Polyethers mit der mittleren Formel

$CH_2=CH\text{-}CH_2\text{-}(OC_2H_4)_{12}(OC_3H_6)_3OH$

und 14,3 g (= 0,125 Mol) Allylglycidether mit 83,8 g (= 0,2 Mol SiH) eines Siloxans mit der durchschnittlichen Formel

$(CH_3)_3SiO[(CH_3)_2SiO]_{22}[(CH_3)HSiO]_5Si(CH_3)_3$

in Gegenwart von 3 mg cis-$[PtCl_2(NH_3)_2]$ umgesetzt. Die Analyse ergibt einen SiH-Umsatz von 98,3 % und einen Gehalt an Epoxy-O von 0,82 % (theoretisch: 0,84 %).

Ohne Aufarbeitung des Zwischenproduktes wird dieses wie in Beispiel 2 mit 20,4 g (= 0,2 Mol) N,N-Dimethylaminopropylamin umgesetzt. Man erhält ein klares, hellbraunes Produkt mit einem Stickstoffgehalt von 1,32 % (theoretisch: 1,40 %) und einer Viskosität (25 °C) von 750 mPas.

Beispiel 6

Entsprechend den Bedingungen von Beispiel 1 werden zunächst 108,4 g (= 0,108 Mol) eines Polyethers mit der mittleren Formel

$CH_2=CH\text{-}CH_2\text{-}(OC_2H_4)_{15}(OC_3H_6)_5OH$

und 16,3 g (= 0,143 Mol) Allylglycidether mit 76 g (= 0,2 Mol SiH) eines Siloxans mit der durchschnittlichen Formel

$(CH_3)_3SiO[(CH_3)_2SiO]_{28}[(CH_3)HSiO]_7Si(CH_3)_3$

in Gegenwart von 5 mg cis-$[PtCl_2(NH_3)_2]$ umgesetzt und aufgearbeitet. Das Zwischenprodukt ist klar und gelbbraun gefärbt. Das Produkt enthält 0,87 % Epoxy-O (theoretisch: 0,92 %) und der SiH-Umsatz beträgt

98,3 %.

Wie in Beispiel 1 werden 147 g (= 0,08 Mol Epoxygruppen) des Epoxygruppen enthaltenden Zwischenproduktes mit 20 g (= 0,2 Mol) N-Methylpiperazin umgesetzt. Man erhält ein klares, hellbraunes Produkt, das einen Stickstoffgehalt von 1,5 % (theoretisch: 1,44 %) und eine Viskosität (25 °C) von 547 mPas hat.

Beispiel 7

In einen mit Rührer, Thermometer, Gaseinleitung und Destillationsaufsatz versehenen Kolben werden 101,4 g (= 0,11 Mol) eines Polyethers mit der durchschnittlichen Formel

$C_4H_9\text{-}(OC_2H_4)_{14}(OC_3H_6)_4OH$

200,6 g (= 0,11 Mol) eines Polyethers mit der durchschnittlichen Formel

$C_4H_9\text{-}(OC_2H_4)_{20}(OC_3H_6)_{15}OH$

und 850 ml Toluol gegeben. Unter Stickstoffabdeckung werden 150 ml Toluol zur azeotropen Trocknung des Polyethergemisches abdestilliert. Bei 50 °C wird der Destillationsaufsatz gegen einen Rückflußkühler ausgetauscht. Anschließend werden erst 38,4 g (= 0,22 Mol) der Verbindung

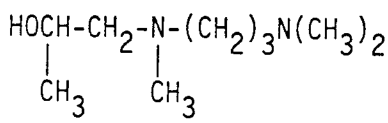

in den Kolben gegeben, gut eingemischt und dann 174 g (= 0,1 Mol) eines Siloxans der durchschnittlichen Formel

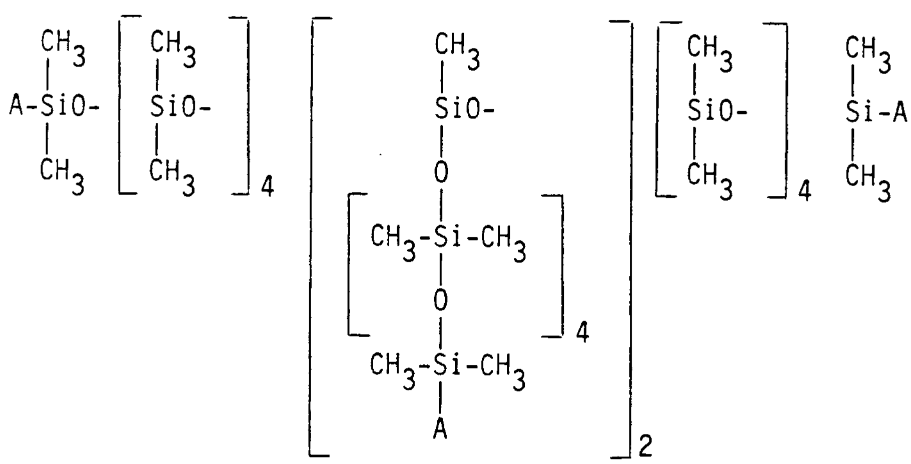

Endgruppe A besteht zu 75 % aus Cl und zu 25 % aus $SO_{4/2}$ zugesetzt. Nachdem das Siloxan gut eingemischt worden ist (10 Min.), wird bei 50 °C Ammoniakgas eingeleitet, bis der Kolbeninhalt ammoniakalisch reagiert. Man läßt noch eine weitere Stunde unter weiterer Einleitung von Ammoniakgas nachreagieren. Anschließend wird das ausgefallene Salz abfiltriert. Danach wird bei 70 °C und 20 mbar Toluol abdestilliert. Man erhält ein hellbraunes, fast klares Produkt. Seine Viskosität (25 °C) beträgt 1015 mPas und der Stickstoffgehalt liegt bei 1,15 % (theoretisch: 1,23 %).

Beispiel 8

Entsprechend den Bedingungen von Beispiel 1 werden zunächst 405 g (= 0,375 Mol) eines Polyethers mit der mittleren Formel $CH_2=CH\text{-}CH_2\text{-}(OC_2H_4)_{14}(OC_3H_6)_7OH$ und 42,8 g (= 0,375 Mol) Allylglycidether mit 223,8 g (= 0,6 Mol SiH) eines Siloxans mit der durchschnittlichen

Formel

$(CH_3)_3SiO[(CH_3)_2SiO]_{40}[(CH_3)HSiO\text{-}]_{10}Si(CH_3)_3$

in Gegenwart von 15 mg cis-$[PtCl_2(NH_3)_2]$ umgesetzt und aufgearbeitet. Das Zwischenprodukt ist klar und gelbbraun gefärbt. Der SiH-Umsatz beträgt 99,4 % und der Gehalt an Epoxy-O 0,69 % (theoretisch: 0,72 %).

Wie in Beispiel 1 werden 185 g (= 0,08 Mol Epoxygruppen) des Epoxygruppen enthaltenden Zwischenproduktes mit 28,8 g (= 0,2 Mol) 3-Morpholinopropylamin umgesetzt. Man erhält ein klares, hellbraunes Produkt mit einem Stickstoffgehalt von 1,08 % (theoretisch: 1,14 %) und einer Viskosität (25 °C) von 1050 mPas.

Beispiel 9

Wie in Beispiel 1 werden 185 g (= 0,08 Mol Epoxygruppen) des bei Beispiel 8 erhaltenen, Epoxygruppen enthaltenden Zwischenproduktes mit 26,0 g (= 0,2 Mol) 2-Piperazinoethanol umgesetzt. Das überschüssige Amin wird nach der Reaktion bei 120 °C und 1 mbar abdestilliert. Man erhält ein klares, hellbraunes Produkt, das 1,24 % Stickstoff enthält (theoretisch: 1,15 %) und eine Viskosität (25 °C) von 980 mPas hat.

Beispiel 10

Wie in Beispiel 1 werden 185 g (= 0,08 Mol Epoxygruppen) des bei Beispiel 8 erhaltenen, Epoxygruppen enthaltenden Zwischenproduktes mit 27,2 g (= 0,2 Mol) N,N-Dimethyl-1,4-phenylendiamin umgesetzt. Das überschüssige Amin wird nach der Reaktion bei 120 °C und 1 mbar abdestilliert. Man erhält ein klares, hellbraunes Produkt, das 1,20 % Stickstoff enthält (theoretisch: 1,14 %) und eine Viskosität (25 °C) von 1278 mPas hat.

Beispiel 11

(nicht erfindungsgemäß)

Das in Beispiel 1 eingesetzte Siloxan wird nur mit dem in Beispiel 1 eingesetzten Polyether umgesetzt.

In einer wie in Beispiel 1 beschriebenen Apparatur werden 135 g 0,125 Mol) eines Polyethers mit der mittleren Formel

$CH_2=CH\text{-}CH_2\text{-}(OC_2H_4)_{14}(OC_3H_6)_7OH$

und 37,3 g (= 0,1 Mol SiH) eines Siloxans mit der durchschnittlichen Formel

$(CH_3)_3SiO[(CH_3)_2SiO]_{40}[(CH_3)HSiO]_{10}Si(CH_3)_3$

in Gegenwart von 4 mg cis-$[PtCl_2(NH_3)_2]$ umgesetzt. Dabei werden Polyether und Platinverbindung bei 110 bis 115 °C unter Stickstoffabdeckung vorgelegt und das Siloxan in 20 Min. zugetropft. Man läßt noch 3 Std. nachreagieren, behandelt den Ansatz wie in Beispiel 1 mit 1,5 g Bentonit und filtriert. Der SiH-Umsatz beträgt 98,7 % und die Viskosität (25 °C) beträgt 1105 mPas.

Beispiel 12

(nicht erfindungsgemäß)

Der Vergleich wird in Analogie zu Beispiel 1 durchgeführt. Jedoch wird anstelle des Allylglycidethers die Verbindung

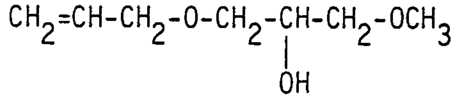

eingesetzt. Man erhält so ein Copolymer, das nicht die erfindungsgemäßen Aminogruppen enthält, ansonsten aber eine ähnliche Struktur aufweist.

Wie in Beispiel 1 beschrieben werden 135 g (= 0,125 Mol) eines Polyethers mit der mittleren Formel

$$CH_2=CH\text{-}CH_2\text{-}(OC_2H_4)_{14}(OC_3H_6)_7OH$$

und 18,3 g (= 0,125 Mol) Allyl-2-hydroxy-3-methoxypropylether mit 74,6 g (= 0,2 Mol SiH) eines Siloxans mit der mittleren Formel

$$(CH_3)_3SiO[(CH_3)_2SiO]_{40}[(CH_3)HSiO]_{10}Si(CH_3)_3$$

in Gegenwart von 7 mg cis-$[PtCl_2(NH_3)_2]$ umgesetzt. Nach der Nachreaktion werden flüchtige Anteile bei 140 °C und 20 mbar abdestilliert. Der Rückstand wird mit 2,5 g Bentonit behandelt und filtriert. Der SiH-Umsatz beträgt 96,9 % und die Viskosität (25 °C) liegt bei 1047 mPas.

I. Anwendungstechnische Prüfung der Stabilisierung und Zellöffnung der erfindungsgemäß zu verwendenden Stabilisatoren in Polyurethanhartschäumen

Die Herstellung eines PU-Hartschaumes erfolgt entsprechend dem Stand der Technik in folgender Weise:

Rezeptur A)

100 g Hartschaumpolyol z.B. OH-Zahl 500,
1,0 g Wasser,
3,0 g Triethylamin,
1,0 g Stabilisator und
40,0 g Trichlorfluormethan
werden 50 Sek. bei 1000 UpM zwecks Homogenisierung gerührt. Die gleichzeitig eingeschlagene Luft dient als Nukleierungshilfe, um zu einem feinzelligen Schaum zu kommen.

Danach werden diesem Gemisch 155 g rohes Diphenylmethandiisocyanat (MDI), entsprechend einem Index 110, zugesetzt. Das Gemisch wird dann 7 Sek. bei 2500 UPM intensiv gerührt. Das homogenisierte Gemisch wird in eine mit Papier ausgekleidete Form gegeben. Der sich bildende Schaum steigt in ca. 2 Min. auf und verfestigt sich. Nach 24 Std. wird der Schaum aufgeschnitten und mit Hilfe des Beckmann "Air Comparison Pycnometers Model 930" in bezug auf den %-Gehalt an offenen Zellen untersucht.

Rezeptur B)

100 g Hartschaumpolyol z.B. OH-Zahl 550,
4,0 g Wasser,
1,5 g Dimethylcyclohexylamin,
1,0 g Stabilisator und
212 g rohes MDI, Index 110
werden wie unter A) behandelt und aufgeschäumt. Danach erfolgt analog A) die Bestimmung des Grades der Offenzelligkeit.

Verschäumungen mit nach den Beispielen 1 bis 12 hergestellten Stabilisatoren

| Stabilisator nach Beispiel | erfindungsgemäß | Rezeptur A) % offene Zellen | Rezeptur B) % offene Zellen |
|---|---|---|---|
| 1 | ja | > 95 | > 95 |
| 2 | ja | 78 | 87 |
| 3 | ja | > 95 | > 95 |
| 4 | ja | 93 | > 95 |
| 5 | ja | 92 | > 95 |
| 6 | ja | 18 | 24 |
| 7 | ja | 15 | 20 |
| 8 | ja | 21 | 26 |
| 9 | ja | 22 | 25 |
| 10 | ja | 18 | 24 |
| 11 | nein | < 5 | < 5 |
| 12 | nein | < 5 | < 5 |

Rezeptur C)

100 g Hartschaumpolyol OH-Zahl 500,
1,0 g $H_2O$,
3,0 g Triethylamin,
1,0 g Stabilisator,
20 g Trichlorfluormethan und
155 g rohes MDI, Index 110

Die Verwendung des Stabilisators von Beispiel 1 führt zu einer Offenzelligkeit von > 95 %.

Rezeptur D)

100 g Hartschaumpolyol OH-Zahl 500,
1,0 g Wasser,
3,0 g Triethylamin,
1,0 g Stabilisator,
10 g Trichlorfluormethan und
155 g rohes MDI, Index 110

In dieser Rezeptur ergibt der Stabilisator von Beispiel 1 eine Offenzelligkeit von 75 %.

II. Anwendungstechnische Prüfung des Dimensionsverhaltens von PU-Schäumen, die mit erfindungsgemäßen bzw. nicht erfindungsgemäßen Stabilisatoren erhalten werden

Zur Prüfung wird ein Schaumwürfel der Maße 10 cm x 10 cm x 10 cm 24 Std. bei -30 °C gelagert. Nach dem Auftauen wird die Volumenänderung (Schrumpf) bestimmt. Das Raumgewicht der geprüften Schäume liegt zwischen 22,5 und 24,2. Dabei wird die Rezeptur A) verwendet, jedoch werden 45 g Trichchlorfluormethan eingesetzt.

| Stabilisator von Beispiel | erfindungsgemäß | Einsatzkonzentration % | Dimensionsstabilität % (Schrumpf) |
|---|---|---|---|
| 1 | ja | 0,5 | < 1 |
| 1 | ja | 1,0 | < 1 |
| 1 | ja | 1,5 | < 1 |
| 11 | nein | 0,5 | 39 |
| 11 | nein | 1,0 | 39 |
| 11 | nein | 1,5 | 40 |

**Patentansprüche**

1. Verwendung von Polysiloxan-Polyoxyalkylen-Blockmischpolymerisaten, welche mindestens eine an ein Siliciumatom gebundene aminofunktionelle Gruppe der allgemeinen Formel

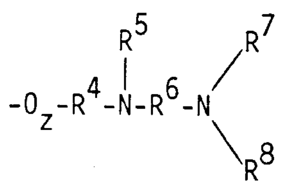

oder

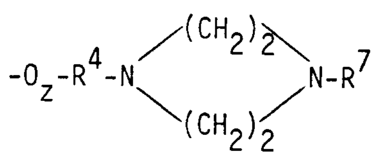

aufweisen,
$R^4$ = ein zweiwertiger Rest,
$R^5$ = Wasserstoff- oder Alkylrest mit 1 bis 4 Kohlenstoffatomen, Polyetherrest der Formel $-(C_qH_{2q}O)_rR^9$ (q = 2, 3 oder 4; r = 1 bis 100; $R^9$ = Wasserstoff- oder Alkylrest mit 1 bis 4 Kohlenstoffatomen) oder der Rest

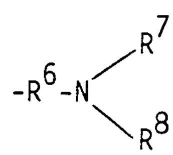

$R^6$ = zweiwertiger aliphatischer Kohlenwasserstoffrest mit 2 bis 6 Kohlenstoffatomen oder zweiwertiger aromatischer Kohlenwasserstoffrest,
$R^7$, $R^8$ = Alkylrest mit 1 bis 4 Kohlenstoffatomen, der eine OH-Gruppe aufweisen kann oder gemeinsamer Bestandteil eines 5- oder 6-gliedrigen Ringes, der ein Sauerstoff-oder Stickstoffatom enthalten kann,
z = 0 oder 1
als Mittel zur zumindest teilweisen Zellöffnung von sonst geschlossene Zellen enthaltenden Polyurethanhartschäumen in Mengen von etwa 0,2 bis 5 Gew.-%, bezogen auf Polyol oder Isocyanatgruppen aufweisendes Prepolymer.

2. Verwendung von Polysiloxan-Polyoxyalkylen-Blockmischpolymerisaten nach Anspruch 1, mit der allgemeinen durchschnittlichen Formel

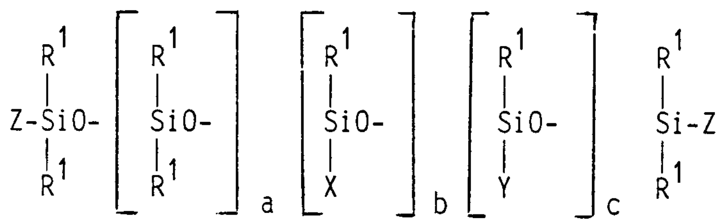

wobei

$R^1$ ein Alkylrest mit 1 bis 6 Kohlenstoffatomen ist, jedoch mindestens 90 % der Reste $R^1$ Methylreste sind,

X ein Polyoxyalkylenblock der allgemeinen Formel

$$-R^2_p\text{-O-}(C_mH_{2m}O\text{-})_nR^3$$

ist,

in dem

$R^2$ ein zweiwertiger Alkylenrest mit 3 bis 11 Kohlenstoffatomen,

$R^3$ ein Wasserstoff- oder Alkylrest mit 1 bis 4 Kohlenstoffatomen ist,

p einen Wert von 0 oder 1 hat,

m die Zahl 2, 3 oder 4 bedeutet und der durchschnittliche Wert 2,0 bis 2,7 beträgt,

n einen Wert von 1 bis 100 hat,

Y eine aminofunktionelle Gruppe der Formel

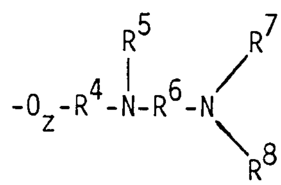

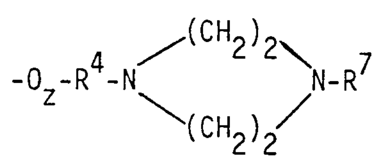

ist, in der $R^4$, $R^5$, $R^6$, $R^7$, $R^8$ und z die bereits angegebene Bedeutung haben,

Z die Bedeutung von X, Y oder $R^1$ hat,

a einen Wert von 10 bis 150,

b einen Wert von 1 bis 20,

c einen Wert von 1 bis 20 hat.

3. Verwendung von Polysiloxan-Polyoxyalkylen-Blockmischpolymerisaten nach Anspruch 2, wobei das Verhältnis von b : c = 0,9 : 0,1 bis 0,2 : 0,8 ist.

4. Verwendung von Polysiloxan-Polyoxyalkylen-Blockmischpolymerisaten nach Anspruch 2, mit der allgemeinen durchschnittlichen Formel

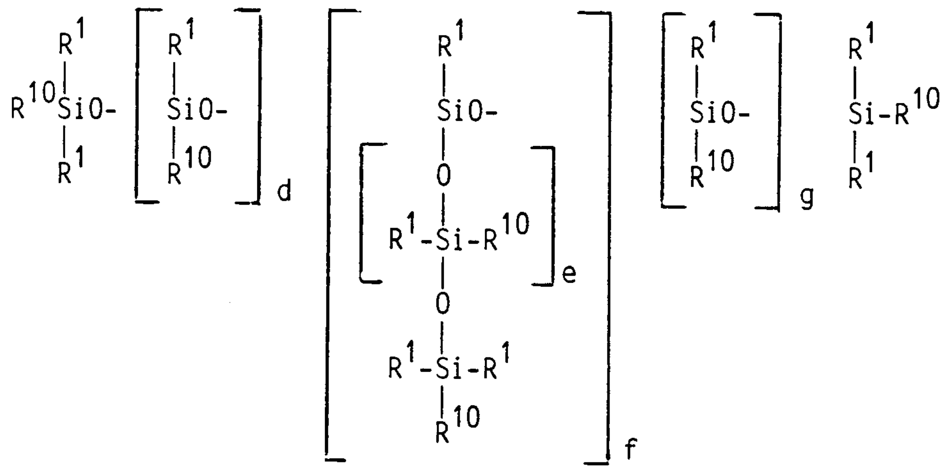

wobei

- $R^1$ die bereits angegebene Bedeutung hat,
- $R^{10}$ ausgewählt ist aus der Gruppe $R^1$, X und Y, die die bereits angegebene Bedeutung haben, wobei im durchschnittlichen Molekül mindestens ein Rest X und ein Rest Y vorhanden sein müssen,
- d einen Wert von 0 bis 20,
- e einen Wert von 0 bis 20,
- f einen Wert von 1 bis 10,
- g einen Wert von 0 bis 20 hat.

**5.** Verwendung von Polysiloxan-Polyoxyalkylen-Blockmischpolymerisaten nach Anspruch 4, dadurch gekennzeichnet, daß
d einen Wert von 1 bis 10,
e einen Wert von 1 bis 10,
f einen Wert von 1 bis 6 und
g einen Wert von 1 bis 10 hat.

**6.** Verwendung von Polysiloxan-Polyoxyalkylen-Blockmischpolymerisaten nach einem oder mehreren der vorhergehenden Ansprüche, wobei $R^1$ ein Methylrest ist.

**7.** Verwendung von Polysiloxan-Polyoxyalkylen-Blockmischpolymerisaten nach einem oder mehreren der vorhergehenden Ansprüche, wobei in der aminofunktionellen Gruppe z einen Wert von 0 hat und $R^4$ ein Rest der Formel

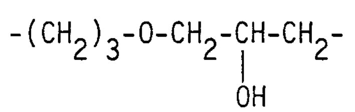

ist.

**8.** Verwendung von Polysiloxan-Polyoxyalkylen-Blockmischpolymerisaten nach einem oder mehreren der vorhergehenden Ansprüche, dadurch gekennzeichnet, daß

- $R^5$ ein Wasserstoff- oder Methylrest,
- $R^6$ ein $-(CH_2)_3-$ Rest,
- $R^7$, $R^8$ jeweils ein Methylrest ist.

## Claims

**1.** Use of polysiloxane-polyoxyalkylene block copolymers, which contain at least one aminofunctional group bonded to a silicon atom and having the general formula

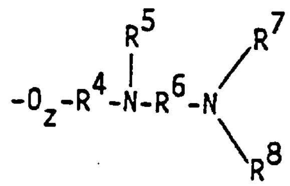

or

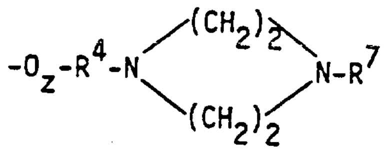

$R^4$ = a divalent radical,

$R^5$ = hydrogen or an alkyl radical having from 1 to 4 carbon atoms, a polyether radical of the formula $-(C_qH_{2q}O)_rR^9$ (q = 2, 3 or 4; r = from 1 to 100; $R^9$ = hydrogen or an alkyl radical having from 1 to 4 carbon atoms) or the radical

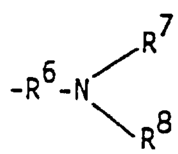

$R^6$ = a divalent aliphatic hydrocarbon radical having from 2 to 6 carbon atoms or a divalent aromatic hydrocarbon radical,

$R^7$, $R^8$ = an alkyl radical having from 1 to 4 carbon atoms, which can contain an OH group or can be a joint constituent of a 5-membered or 6-membered ring which can contain an oxygen or nitrogen atom,

z = 0 or 1,

as agents for at least the partial cell opening of polyurethane rigid foams, containing otherwise closed cells, in amounts of from about 0.2 to 5 % by weight, based on prepolymer containing polyol or isocyanate groups.

**2.** Use of polysiloxane-polyoxyalkylene block copolymers according to Claim 1, which have the general average formula

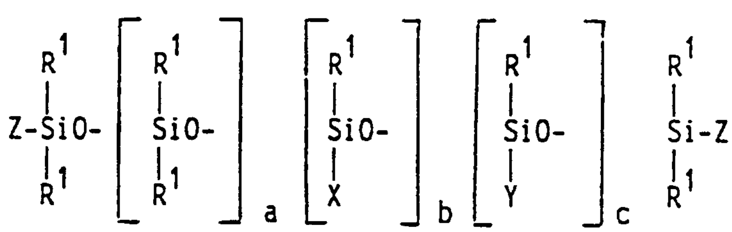

where

$R^1$ is an alkyl radical having from 1 to 6 carbon atoms, but at least 90 % of the radicals $R^1$ being methyl radicals,

X is a polyoxyalkylene block of the general formula

$$-R_p^2\ -O-(C_mH_{2m}O-)_nR^3,$$

in which

$R^2$ is a divalent alkylene radical having from 3 to 11 carbon atoms,

$R^3$ is a hydrogen or an alkyl radical having from 1 to 4 carbon atoms,

p is 0 or 1,

m is 2, 3 or 4 and has an average value from 2.0 to 2.7,

n is from 1 to 100,

Y is an aminofunctional group of the formula

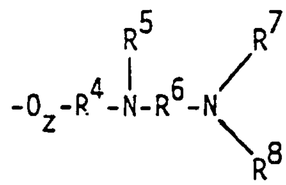

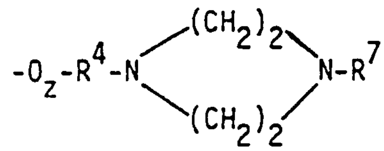

in which $R^4$, $R^5$, $R^6$, $R^7$, $R^8$ and z are as defined above,

Z is as defined for X, Y or $R^1$,

a is from 10 to 150,

b is from 1 to 20,

c is from 1 to 20.

**3.** Use of polysiloxane-polyoxyalkylene block copolymers according to Claim 2, wherein the ratio of b : c = from 0.9 : 0.1 to 0.2 : 0.8.

**4.** Use of polysiloxane-polyoxyalkylene block copolymers according to Claim 2, which have the general average formula

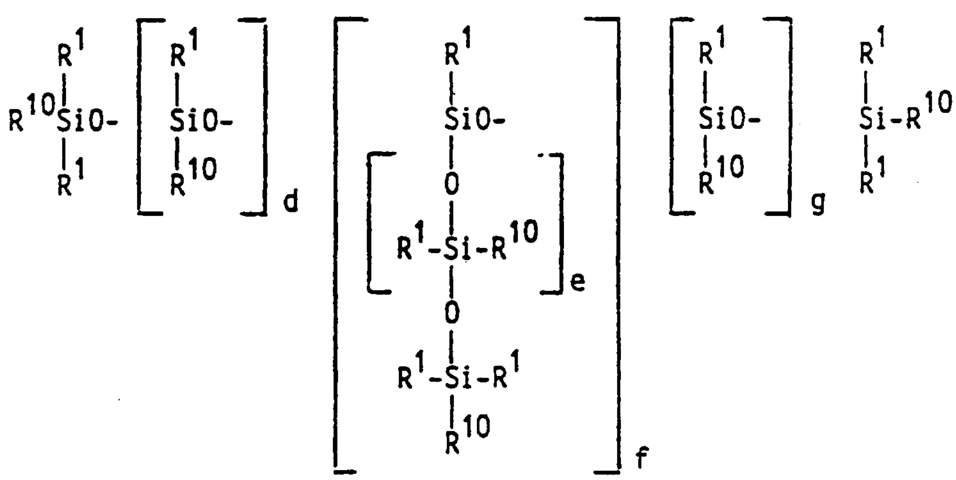

where

$R^1$ is as defined above,

$R^{10}$ is selected from the group consisting of $R^1$, X and Y, which are as defined above, with at least one radical X and one radical Y having to be present in the average molecule,

d is from 0 to 20,

e is from 0 to 20,

f is from 1 to 10,
g is from 0 to 20.

5. Use of polysiloxane-polyoxyalkylene block copolymers according to Claim 4, characterized in that
 d is from 1 to 10,
 e is from 1 to 10,
 f is from 1 to 6 and
 g is from 1 to 10.

6. Use of polysiloxane-polyoxyalkylene block copolymers according to one or more of the preceding claims, wherein $R^1$ is a methyl radical.

7. Use of polysiloxane-polyoxyalkylene block copolymers according to one or more of the preceding claims, wherein, in the aminofunctional group, z is 0 and $R^4$ is a radical of the formula

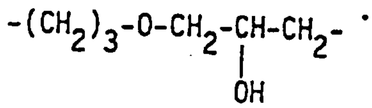

8. Use of polysiloxane-polyoxyalkylene block copolymers according to one or more of the preceding claims, characterized in that
 $R^5$ is a hydrogen or a methyl radical,
 $R^6$ is a $-(CH_2)_3-$ radical,
 $R^7$, $R^8$ are each a methyl radical.

**Revendications**

1. Utilisation de copolymères séquencés polysiloxane-polyoxyalkylène, qui comportent au moins un groupe amino-fonctionnel, lié à un atome de silicium, de formule générale

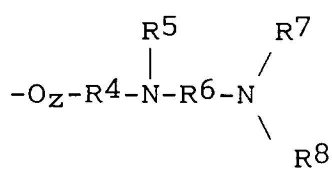

ou

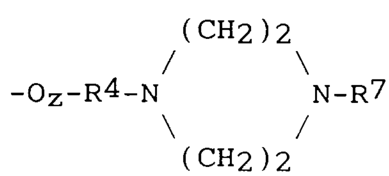

dans laquelle
 $R^4$ est un radical divalent,
 $R^5$ est un hydrogène ou un radical alkyle ayant de 1 à 4 atomes de carbone, un résidu polyéther de formule $-(C_qH_{2q}O)_rR^9$ (q = 2, 3 ou 4 ; r = 1 à 100 ; $R^9$ est un hydrogène ou un radical alkyle ayant de 1 à 4 atomes de carbone, ou encore le radical

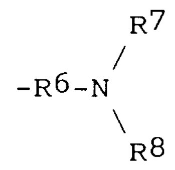

$R^6$ est un radical hydrocarboné aliphatique divalent ayant de 2 à 6 atomes de carbone ou encore un radical hydrocarboné aromatique divalent,

$R^7$ et $R^8$ sont des radicaux alkyle ayant de 1 à 4 atomes de carbone, pouvant porter un groupe OH ou représentant un constituant commun d'un cycle à 5 ou 6 chaînons susceptible de contenir un atome d'oxygène ou un atome d'azote,

z vaut 0 ou 1,

en tant que moyen pour ouvrir, au moins partiellement, les alvéoles de mousses rigides de polyuréthanne contenant par ailleurs des alvéoles fermés, en des quantités d'environ 0,2 à 5 % en poids par rapport au prépolymère comportant un polyol ou des groupes isocyanate.

**2.** Utilisation de copolymères séquencés de polysiloxane-polyoxyalkylène selon la revendication 1, qui ont la formule moyenne générale

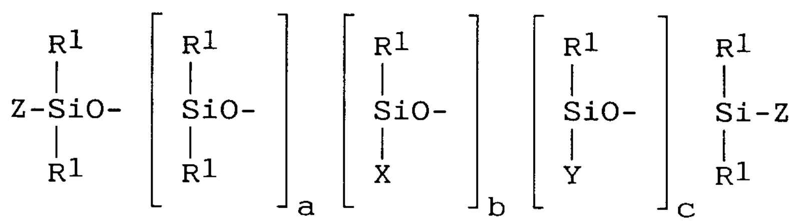

dans laquelle

$R^1$ est un radical alkyle ayant de 1 à 6 atomes de carbone, mais au moins 90 % des radicaux $R^1$ étant des radicaux méthyle,

X est une séquence polyoxyalkylène de formule générale

$-R_p^2-O-(C_mH_{2m}O-)_nR^3$

dans laquelle

$R^2$ est un radical alkylène divalent ayant de 3 à 11 atomes de carbone,

$R^3$ est un hydrogène ou un radical alkyle ayant de 1 à 4 atomes de carbone,

p vaut 0 ou 1,

m est le nombre 2, 3 ou 4, et a une valeur moyenne de 2,0 à 2,7,

n vaut de 1 à 100,

Y est un groupe amino-fonctionnel de formule

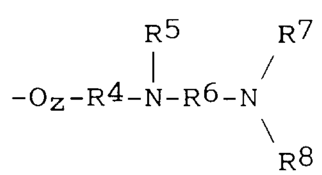

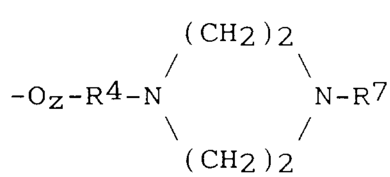

dans laquelle $R^4$, $R^5$, $R^6$, $R^7$, $R^8$ et z ont les significations données ci-dessus,

Z a les significations de X, Y ou $R^1$,
a vaut de 10 à 150,
b vaut de 1 à 20,
c vaut de 1 à 20.

3. Utilisation de copolymères séquencés de polysiloxane-polyoxyalkylène selon la revendication 2, où le rapport b:c est compris entre 0,9:0,1 et 0,2:0,8.

4. Utilisation de copolymères séquencés de polysiloxane-polyoxyalkylène selon la revendication 2, ayant la formule moyenne générale suivante :

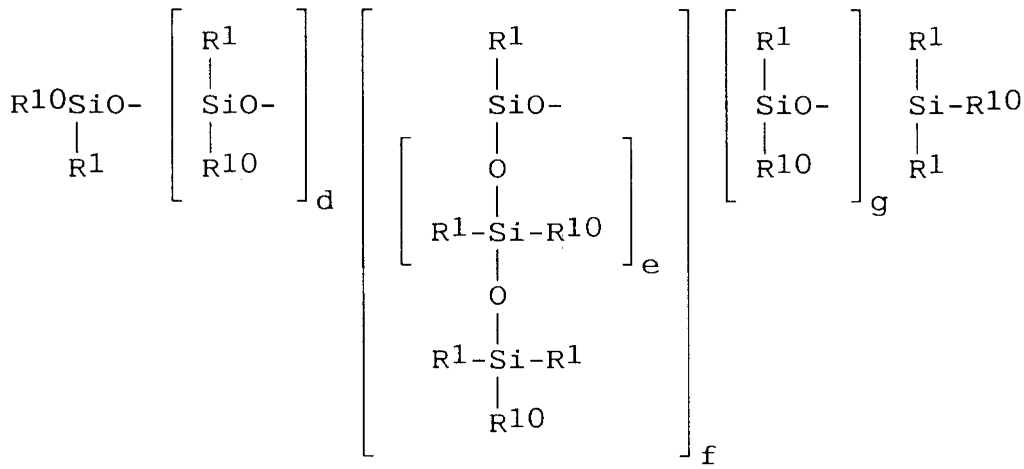

dans laquelle
$R^1$ a les significations données ci-dessus,
$R^{10}$ est choisi parmi l'ensemble comprenant $R^1$, X et Y, qui ont les significations données ci-dessus, où au moins un radical X et un radical Y doivent être présents dans la molécule moyenne,
d vaut de 0 à 20,
e vaut de 0 à 20,
f vaut de 1 à 10,
g vaut de 0 à 20.

5. Utilisation de copolymères séquencés de polysiloxane-polyoxyalkylène selon la revendication 4, caractérisée en ce que
d vaut de 1 à 10,
e vaut de 1 à 10,
f vaut de 1 à 6 et
g vaut de 1 à 10.

6. Utilisation de copolymères séquencés de polysiloxane-polyoxyalkylène selon l'une ou plusieurs des revendications précédentes, dans laquelle $R^1$ est un radical méthyle.

7. Utilisation de copolymères séquencés de polysiloxane-polyoxyalkylène selon l'une ou plusieurs des revendications précédentes, dans laquelle, dans le groupe amino-fonctionnel, z vaut 0 et $R^4$ est un radical de formule

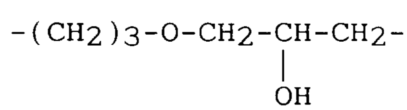

8. Utilisation de copolymères séquencés de polysiloxane-polyoxyalkylène selon l'une ou plusieurs des revendications précédentes, caractérisée en ce que :

$R^5$ est un hydrogène ou le radical méthyle,
$R^6$ est un radical $-(CH_2)_3-$,
$R^7$ et $R^8$ sont chacun un radical méthyle.